# FASCICULE DE BREVET EUROPEEN

(11) **EP 3 036 466 B1**
(45) Date de publication et mention de la délivrance du brevet: **29.06.2022**
(21) Numéro de dépôt: 14755885.2
(22) Date de dépôt: 06.08.2014
(51) Int. Cl.: F16L 11/08

(54) **PROCÉDÉ DE FABRICATION D'UNE CONDUITE TUBULAIRE FLEXIBLE**
VERFAHREN ZUR HERSTELLUNG EINER FLEXIBLEN ROHRLEITUNG
METHOD FOR MANUFACTURING A FLEXIBLE TUBULAR PIPE

(30) Priorité: 22.08.2013 FR 1358126
(43) Date de publication de la demande: 29.06.2016
(73) Titulaire: TECHNIP N-POWER, 92400 Courbevoie (FR)
(72) Inventeur: EPSZTEIN, Thomas, F-76000 Rouen (FR); DEMANZE, Frédéric, F-76490 Caudebec en Caux (FR)
(74) Mandataire: Fédit-Loriot
(86) Numéro de dépôt international: PCT/FR2014/052043
(87) Numéro de publication internationale: WO 2015/025095

(56) Documents cités:
- EP-B1- 3 034 921
- WO-A1-2008/025893
- WO-A1-2012/131260
- FR-A1- 2 590 646
- FR-A1- 2 782 141
- US-A1- 2013 276 931

## Description

La présente invention se rapporte à un procédé de fabrication d'une conduite tubulaire flexible destinée au transport des hydrocarbures et à une conduite tubulaire flexible obtenue par un procédé tel que celui décrit dans US 2013/276931 A1 / EP 3 034 921 B1.

De telles conduites sont en particulier utilisées pour le transport offshore des hydrocarbures, entre une installation sous-marine et une installation de surface.

Elles sont constituées de plusieurs couches métalliques et plastiques superposées leur conférant leurs propriétés mécaniques et leurs propriétés d'étanchéité vis-à-vis de l'hydrocarbure qu'elles transportent et du milieu environnant. Aussi, les conduites tubulaires flexibles comprennent généralement, de l'intérieur vers l'extérieur, une carcasse métallique faite d'un feuillard en spirale agrafé, une gaine de pression en matériau polymère, un enroulement hélicoïdal a pas court d'un fil métallique formant une voûte de pression, au moins une nappe d'armures de traction enroulées à pas long autour de ladite voûte de pression, et une gaine de protection externe.

La carcasse métallique permet d'éviter que la gaine de pression située au-dessus ne s'effondre vers l'intérieur lorsque la conduite est en dépression. Lors de la fabrication de la conduite tubulaire flexible, la gaine de pression est directement extrudée coaxialement autour de la carcasse métallique qui est entraînée en translation à travers une tête d'extrusion. La gaine de pression est usuellement réalisée avec des polymères thermoplastiques, et notamment des polymères à base de Polyfluorure de vinylidène. Après que la gaine de pression a été refroidie, on vient enrouler hélicoïdalement à pas court au moins un fil métallique autour de celle-ci en formant des spires non jointives. La voûte de pression ainsi formée, va permettre de préserver la gaine de pression des contraintes radiales exercées par la pression hydrostatique externe du fond marin et par celle exercée par le fluide d'hydrocarbures circulant au sein de la carcasse métallique. En outre, de par sa construction, elle autorise la flexion de la conduite.

Les spires définissent entre elles des intervalles, ou des espaces communément dénommés « déjoints ». La largeur et la profondeur de ces déjoints sont fonction de la forme du fil métallique, de son épaisseur et également du pas d'hélice. On vient ensuite enrouler hélicoïdalement à pas long autour de la voûte de pression, au moins une couche d'une pluralité de fils d'armures de traction, permettant précisément de reprendre les efforts de traction qui s'exercent sur la conduite. Enfin, on vient recouvrir les armures de traction d'une gaine externe de protection, laquelle est extrudée directement à travers une tête d'extrusion.

Ensuite, la conduite tubulaire flexible est qualifiée et testée en portant l'intérieur à une pression déterminée pendant une période également déterminée. La pression imposée à la conduite est alors prédéfinie en fonction de la pression interne quelle sera susceptible de subir lorsqu'elle sera mise en service. Conformément aux documents API 17J et API 16C relatifs respectivement aux conduites flexibles non liées et aux systèmes Kill & Choke, établis par l'American Petroleum Institute, et aux normes en vigueur auxquelles il fait référence, cette pression est selon les cas, de 1,3 ou de 1,5 fois la pression de service. Cette dernière peut atteindre le millier de bars, voire la dizaine de milliers de bars.

Lorsque la conduite est mise en pression, en injectant par exemple de l'eau à l'intérieur, la gaine de pression va non seulement venir se plaquer contre la face interne de la voûte de pression, mais elle va également se déformer localement au niveau des déjoints. Ainsi, la surface externe de la gaine de pression va avoir tendance à fluer à l'intérieur des déjoints, tandis qu'un retrait apparaît de chaque côté de la zone de fluage dans l'épaisseur de la gaine de pression. En outre, à l'opposé, vers la surface interne de la gaine de pression en contact avec la carcasse, on observe les résultats de phénomènes de cavitation.

Ainsi, la mise en pression de la conduite, en particulier durant la phase de test, vient fragiliser la gaine de pression en la déformant localement tant à l'extérieur au niveau des déjoints de la voûte de pression qu'à l'intérieur au niveau de la carcasse. Au niveau des déjoints, le matériau polymère se déforme radialement et des contraintes internes pouvant conduire à l'apparition d'un délaminage de la matière, apparaissent. Aussi, le vieillissement de la conduite en service est accéléré, et ce, notamment pour les applications en grandes profondeurs où les conditions de température et de pression sont élevées.

Pour remédier au problème du fluage de la gaine de pression à travers les déjoints de la voûte, il a été imaginé d'appliquer une couche anti-fluage entre la gaine de pression et la voûte de pression. Cette couche anti-fluage est par exemple réalisée en enroulant hélicoïdalement une bande polymérique autour de la gaine de pression avant d'enrouler le fil métallique de la voûte de pression.

Toutefois, la mise en œuvre de cette couche anti-fluage nécessite une opération supplémentaire et, même si elle résout les problèmes liés à la cavitation, en empêchant le fluage de la gaine de pression à travers les déjoints, elle représente un coût additionnel. De plus, cela implique aussi de s'assurer que cette couche reste intègre pendant au moins vingt ans si l'on ne souhaite pas que la gaine de pression flue.

Aussi, un problème qui se pose et que vise à résoudre la présente invention est de pouvoir fabriquer une conduite tubulaire flexible, dont la gaine de pression conserve non seulement son intégrité lorsque la conduite est mise en pression, mais également qui puisse être obtenue à un coût avantageux.

Dans ce but, selon un premier aspect, la présente invention propose un procédé de fabrication d'une conduite tubulaire flexible destinée au transport des hydrocarbures, selon la revendication 1.

Ainsi, une caractéristique de l'invention réside dans la mise en œuvre d'énergie thermique permettant de porter la gaine de pression à une température donnée T_{d}, tandis qu'elle est soumise à une pression interne. De la sorte, on vient non seulement relaxer les contraintes internes du matériau polymère, mais aussi, on les minimise. Partant, on observe que l'excursion de la surface externe de la gaine de pression à travers les déjoints qui se produit lors du fluage réduit significativement l'amplitude du retrait situé de chaque côté de la zone de fluage. Aussi, le niveau de contrainte associé à la déformation de la surface externe de la gaine de pression, et générateur de zone de décohésion, est moindre au niveau de la zone de fluage. On peut alors s'affranchir de la mise en œuvre relativement coûteuse d'un film écran, susceptible de se dégrader dans le temps, entre la gaine de pression et la voûte de pression. Au surplus, les résultats des phénomènes de cavitation, plus du côté de la surface interne de la gaine de pression et les zones de décohésion initialement présentes dans les excursions de la surface externe de la gaine de pression n'apparaissent plus.

On observera que ledit matériau polymère thermoplastique présente une température de transition vitreuse T_{g} et une température de transition secondaire T_{g'} supérieure à ladite première température de transition vitreuse T_{g}. Les polymères thermoplastiques mis en œuvre pour réaliser les gaines de pression sont des polymères semi-cristallins. Aussi, ils présentent deux phases principales, une phase cristalline et une phase amorphe. La phase cristalline correspond à des zones de polymère organisée en lamelles cristallines, lesquelles sont regroupées dans des sphérolites.

La température de transition vitreuse, caractéristique du polymère, résulte de la transformation de cette phase amorphe, entre un état vitreux où le polymère est relativement rigide et un état caoutchouteux. Il existe toutefois deux types de phase amorphe dans le matériau, un premier type où la phase amorphe est totalement libre vis-à-vis des sphérolites, et un second type où la phase amorphe est piégée dans les sphérolites entre les lamelles cristallines. On distingue ainsi le type de phase amorphe libre et le type de phase amorphe confinée. Aussi, la quantité d'énergie thermique nécessaire à la transformation de cette phase amorphe de second type, d'un état vitreux à un état caoutchouteux, est-elle par nature supérieure à la quantité d'énergie thermique permettant de transformer la phase amorphe du premier type. Par conséquent, on observe pour ce type de matériau, deux températures de transition distinctes, une température de transition vitreuse T_{g} déterminée par calorimétrie différentielle à balayage ou DSC, l'acronyme anglais de : « Differential Scanning Calorimetry » ou bien par analyse mécanique dynamique ou DMA, l'acronyme anglais de : « Dynamic Mechanical Analysis », et une température de transition secondaire T_{g'} déterminée par analyse mécanique dynamique. Partant, selon un mode de mise en œuvre de l'invention particulièrement avantageux, ladite température donnée T_{d} est comprise entre T_{g} et T_{g'}. T_{d} peut être égale ou supérieure à T_{g'} mais pour des raisons de coûts, on préférera fixer la température T_{d} entre T_{g} et T_{g'}.

Préférentiellement, ladite température donnée T_{d} est voisine de ladite température de transition secondaire T_{g'}. Avantageusement, ladite température donnée T_{d} est supérieure à la température ambiante T₀, laquelle vaut en moyenne 18 °C. Bien évidemment, la température ambiante varie en fonction de la situation géographique où l'on se trouve. Cette température donnée T_{d} est par exemple comprise entre 40° et 80 °C voire supérieure à 80°C suivant la nature du matériau polymère thermoplastique extrudé autour de la carcasse métallique.

Selon un mode de mise en œuvre de l'invention avantageux, à l'étape d), ladite pression donnée P_{d} est supérieure à la pression atmosphérique P₀. En effet, la pression donnée P_{d} doit nécessairement être supérieure à la pression de service de la conduite tubulaire flexible de manière à anticiper tout défaut qui induirait sa détérioration. On considère ainsi, que si la gaine de pression de la conduite résiste à une pression interne supérieure à la pression de service, elle pourra résister à une période de temps suffisamment longue à la pression de service.

Préférentiellement, à l'étape d), ledit espace d'écoulement interne est porté à une première pression P₁ pendant une première période de temps t₁ et à une seconde pression P₂ pendant une seconde période de temps t₂. De la sorte, les contraintes résiduelles induites dans le matériau après les étapes d'extrusion et de refroidissement de la gaine de pression vont être atténués grâce à des mécanismes de relaxation dus à la température et aux variations de pression, et les niveaux de contrainte dans la gaine de pression, générés par la mise en pression dudit espace d'écoulement interne pendant l'étape d) sont limités. Aussi, les phénomènes de cavitation sont plus encore atténués. En outre, les caractéristiques mécaniques du matériau polymère de la gaine de pression sont moins impactées par l'effet de la pression.

De manière avantageuse, ledit espace d'écoulement interne est porté à une pression P inférieure à ladite pression donnée P_{d} entre lesdites première et seconde périodes de temps t₁ et t₂. Par exemple, ledit espace d'écoulement interne est porté, entre lesdites première et seconde périodes de temps t₁ et t₂, à une pression P voisine de la pression atmosphérique P₀.

En outre, de manière préférée, ladite première période de temps t₁ est supérieure à la période de temps recommandée par les documents normatifs de l'American Petroleum Institute. Par ailleurs, ladite seconde période de temps t₂ est supérieure ou égale à ladite première période de temps t₁. Et par exemple, ladite seconde période de temps t₂ est comprise entre une et trois fois ladite première période de temps t₁. Selon un mode de mise en œuvre particulièrement avantageux, la première période de temps t₁ présente une durée supérieure ou égale à 12 heures, et la seconde période de temps t₂ voisine de 24 heures.

Selon une caractéristique particulièrement avantageuse de l'invention, ledit matériau polymère thermoplastique est choisi parmi les matériaux de la famille des polymères fluorés. Par exemple, le matériau polymère est le Polyfluorure de vinylidène, ou bien un matériau choisi parmi les copolymères de fluorure de vinylidène, c'est-à-dire parmi les polymères dont la chaine principale est constituée de deux ou trois monomère de nature chimique différente, un des monomères principaux étant le fluorure de vinylidène, et les autres monomères étant choisi parmi les monomères suivants : l'hexafluoropropylène, le perfluoro(méthylvinyl)éther, le perfluoro(éthylvinyl)éther, le perfluoro(propylvinyl)éther, le tétrafluoroéthylène , le perfluorobutyléthylène , le fluoropropylène, le chlotrifluoroéthylène, le chlorodifluoroethylene, le chlorofluoroethylene, le trifluoroéthylène, le poly(éthylène-co-tétrafuoroéthylène), le poly(perfluoroalcoxyéthylène), le poly(perfluorométhoxyéthylène), le poly(éthylène-propylène perfluoré), le poly chlorotrifluoroéthylène, le poly(éthylène-co-chlorotrifluoroéthylène), ou bien un mélange de ces polymères pris en combinaison.

Aussi, et de manière non limitative, le matériau polymère est choisi parmi la famille des polysulfoniques tel que le poly(sulfure de phénylène) ou bien il est choisi parmi la famille des polyaryléthercétone tel que le polyétheréthercétone (PEEK).

En outre, et selon une autre caractéristique particulièrement avantageuse, entre l'étape c) et l'étape d), on forme une gaine de protection tubulaire autour de ladite pluralité de fils d'armure de traction. Cette gaine permet de préserver l'intérieur de la conduite tubulaire flexible, et en particulier les fils métalliques vis-à-vis de l'eau du milieu marin.

Selon un autre objet, la présente invention concerne une conduite tubulaire flexible destinée au transport des hydrocarbures, obtenue par un procédé de fabrication tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective partielle et en écorché d'une conduite tubulaire flexible obtenue selon un procédé de fabrication conforme à l'invention ;
- la Figure 2 est une vue schématique partielle en coupe axiale de la conduite tubulaire flexible illustrée sur la figure 1, selon une première configuration ;
- la Figure 3 est un graphique représentant le profil de pression appliqué à la conduite tubulaire flexible illustrée sur la figure 1 conformément au procédé de fabrication selon l'invention ; et,
- la Figure 4 est une vue schématique partielle en coupe axiale de la conduite tubulaire flexible illustrée sur la figure 1, selon une seconde configuration.

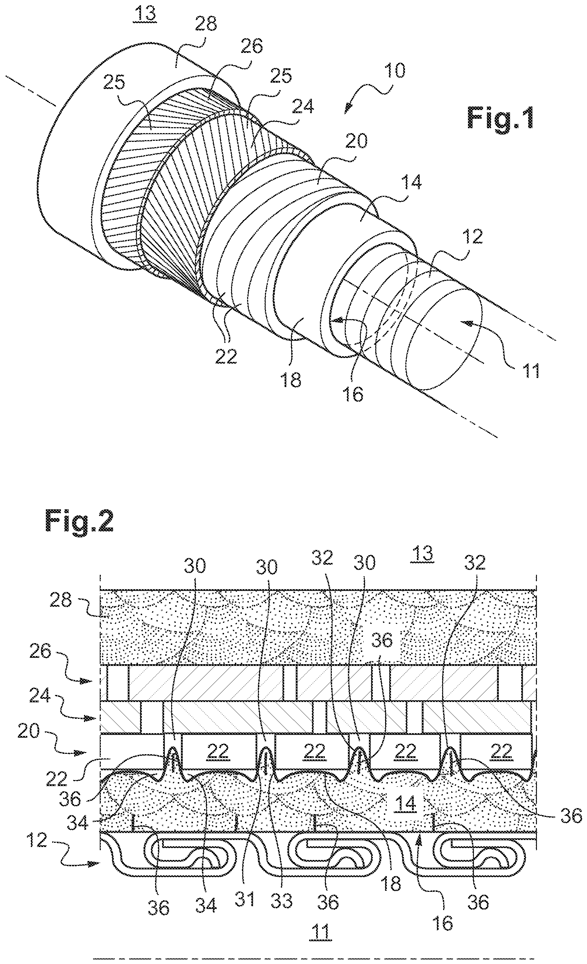

L'objet de l'invention, selon un premier aspect, est un procédé de fabrication d'une conduite tubulaire flexible destinée au transport des hydrocarbures en milieu marin. On se référera tout d'abord à la figure 1 représentant en écorché une conduite tubulaire flexible 10, afin de décrire les premières étapes successives de la fabrication de la conduite. Elle représente les différentes couches superposées qui forment la conduite et celles-ci sont successivement formées les unes sur les autres, de l'intérieur 11 de la conduite vers l'extérieur 13. L'intérieur 11 forme un espace d'écoulement interne de l'hydrocarbure.

La figure 1 illustre une carcasse 12 qui est la première couche de la conduite tubulaire flexible 10. Elle est optionnelle, aussi dans certaines circonstances, la conduite tubulaire flexible 10 en est dépourvue. Elle est réalisée en formant un ruban métallique, ou feuillard, en recourbant en U les deux bordures opposées dans deux sens opposés l'un de l'autre et en l'enroulant en spirale pour engager les bordures l'une dans l'autre. Cette opération constitue une liaison par agrafage.

Après que cette carcasse 12 d'une longueur donnée a été réalisée, puis enroulée sur un touret adapté, on vient l'engager à travers une tête d'extrusion circulaire et la dérouler en continu de manière à extruder coaxialement une gaine de pression 14 en matériau polymère sur la carcasse 12. Pour ce faire, le matériau polymère est extrudé à chaud. La gaine de pression 14 présente une épaisseur qui s'étend entre une surface interne 16 et une surface externe opposée 18. La surface interne 16 de la gaine de pression 14 est alors en contact avec la carcasse 12.

Le matériau polymère mis en œuvre est un matériau thermoplastique semi-cristallin et dans l'exemple présenté c'est un matériau à base de Polyfluorure de vinylidène. D'autres polymères fluorés semi-cristallins sont susceptibles d'être mis en œuvre pour cette application, notamment le poly(perfluoroalcoxyéthylène) (PFA) que l'on détaillera ci-après. Le matériau est à base de Polyfluorure de vinylidène en ce sens qu'il contient essentiellement ce composé avec en surplus, des additifs usuels, notamment pour faciliter l'extrusion ou résister à la dégradation. Il contient également des plastifiants, par exemple dans une proportion pondérale inférieure à 15 %, préférentiellement inférieure à 5%.

Ce matériau polymère présente deux températures de transition distinctes, vitreuse T_{g} et secondaire T_{g'} représentatives de deux types de phase amorphe, l'un où la phase amorphe est libre entre les sphérolites, l'autre où elle est piégée dans des lamelles cristallines constituant précisément les sphérolites. Précisément pour ce matériau polymère, la première température de transition vitreuse T_{g}, ou principale, est sensiblement comprise entre -30 °C et -40 °C, mesurée à la pression atmosphérique. La température de transition secondaire T_{g'} est, elle, comprise entre 40 °C et 80 °C mesurée à la pression atmosphérique. On expliquera plus en détail ci-après, les comportements du matériau polymère durant le procédé de fabrication de la conduite en relation avec ces deux paramètres T_{g} et T_{g'}.

Après la formation de la gaine de pression 14 sur la carcasse 12, celle-ci est refroidie jusqu'à atteindre le voisinage de la température ambiante, soit environ 18 °C.

Ensuite, la gaine de pression 14 est recouverte d'une voûte de pression 20 faite d'un fil métallique de section sensiblement rectangulaire, enroulé en spirale à pas court en formant des spires 22 non jointives. Les spires 22 contiguës sont espacées les unes des autres en formant des intervalles, ou déjoints, et elles viennent s'appliquer radialement sur la surface externe 18 de la gaine de pression 14. La voûte de pression 20 permet de reprendre les efforts externes exercés radialement par la pression hydrostatique sur la conduite tubulaire flexible en milieu marin ainsi que les efforts internes radiaux exercés par la circulation du fluide d'hydrocarbures au sein de l'espace d'écoulement interne. De la sorte la gaine de pression 14 est préservée.

On observera également que la voûte de pression 20 n'est pas nécessairement réalisée par l'enroulement d'un seul fil et qu'au surplus, ce fil n'est pas nécessairement de section rectangulaire. Il peut présenter une section particulière, par exemple de géométrie en forme de Z, de T, de U ou de K, permettant d'agrafer entre elles les spires. Cependant la présence des déjoints demeure.

La voûte de pression 20 est ensuite recouverte d'au moins deux nappes 24, 26 d'une pluralité de fils d'armures 25 enroulées à pas long et dans deux sens opposés l'un de l'autre. Les armures de ces nappes 24, 26 sont dites, armures de traction, car elles permettent de reprendre les efforts de traction qui s'exercent sur la conduite en exploitation.

Enfin, les deux nappes 24, 26 d'armures de traction sont recouvertes d'une gaine d'étanchéité externe 28 réalisée dans un matériau plastique, et par exemple, un matériau identique à celui de la gaine de pression 20. Cette gaine d'étanchéité externe 28, permet de préserver la structure interne de la conduite flexible 10 vis-à-vis du milieu marin, et notamment les fils métalliques des nappes d'armures 24, 26 et aussi de la voûte de pression 20.

La conduite tubulaire flexible 10 ainsi obtenue va alors subir d'autres étapes de fabrication. Usuellement, l'intérieur de la conduite tubulaire flexible 10 est pressurisée de manière à pouvoir tester notamment, son étanchéité et son intégrité. La figure 2 illustre partiellement en coupe hémi-axiale la conduite tubulaire flexible 10 après que ce test de pression a été réalisé.

On retrouve sur la figure 2, la gaine d'étanchéité externe 28 recouvrant les deux nappes d'armures 24, 26 qui elles-mêmes recouvrent la voûte de pression 20. Cette dernière présente en section les spires non jointives 22 lesquelles sont espacées les unes des autres pour former les déjoints 30. On retrouve également sur cette figure 2, la gaine de pression 14 appuyée sur la carcasse 12, et présentant sa surface interne 16 et sa surface externe 18 opposée.

On observera que la surface externe 18 présente des déformations locales au niveau des déjoints 30, et notamment des déformations radiales. Ainsi, la surface 18 présente, au droit des déjoints 30, une excursion massive 32 du matériau polymère à l'intérieur des déjoints 30 et de chaque côté des excursions massives 32, sensiblement au droit des bords internes 31, 33, des spires 22, un retrait 34 du matériau polymère. En effet, sous l'action de la pression, la gaine de pression vient s'appliquer à force contre les spires 22 de la voûte de pression 20 et le matériau polymère vient fluer à travers les déjoints 30. Mais, lorsque l'on cesse d'appliquer la pression, le matériau se rétracte au niveau des bords interne 31, 33. Ce fluage à travers les déjoints 30 peut conduire à une décohésion du matériau polymère au sein des excursions massives 32 et à un retrait et un endommagement de la matière au niveau de la surface externe 18 de la gaine de pression 14. Ces phénomènes se manifestent soit dés lors du test de pression permettant de tester et qualifier la conduite tubulaire flexible, soit ultérieurement lorsqu'elle est en fonctionnement sur le site de production d'hydrocarbures. Au surplus, à l'opposé du côté de la surface interne 16 de la gaine de pression 14, on observe des défauts 36 dus au phénomène de cavitation. Ces phénomènes sont liées à la mise en pression de l'intérieur de la conduite tubulaire flexible 10. En effet, cette mise en pression peut être de l'ordre de 1500 bars, ou selon un exemple de mise en œuvre de 2172 bars.

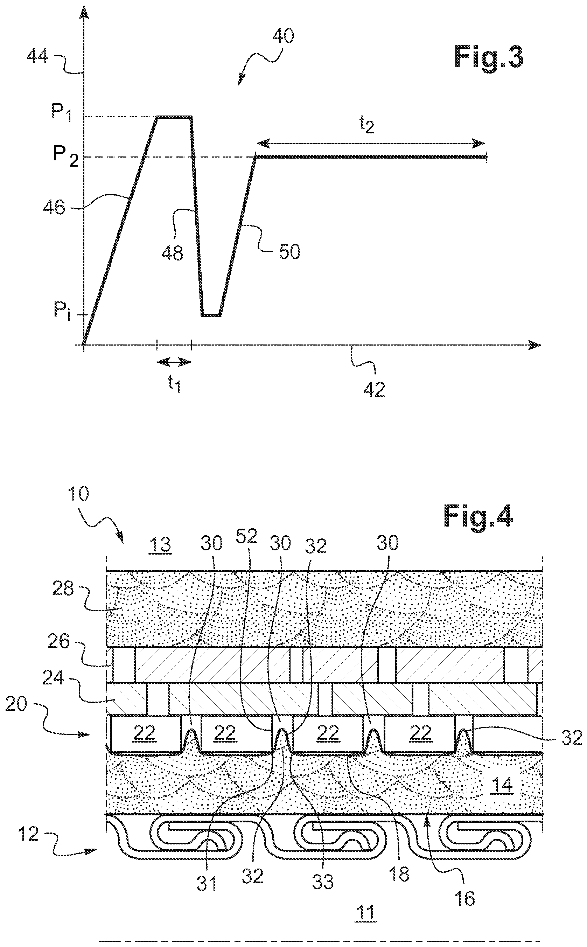

Contre toute attente, il s'avère que la mise en pression de l'intérieur de la conduite tubulaire flexible 10 concomitamment à l'apport d'énergie thermique à la gaine de pression 20, permettent non seulement de réduire les phénomènes d'endommagement de la surface externe 18 au niveau des déjoints 30, mais aussi les conséquences des phénomènes de cavitation. En effet, comme expliquer ci-après en référence à la figure 4, en augmentant la température de la gaine de pression 20, sa viscosité diminue et partant, le retrait au niveau des bords internes 31, 33 des déjoints 30 ainsi que la propagation des défauts 36 présents dans les excursions 32 et au niveau de la face interne 16 de la gaine de pression 14 sont minimisés.

On décrira à présent, en référence à la figure 3, le profil de pression P appliqué à la conduite tubulaire flexible 10 en fonction du temps. Ainsi, la figure 3 illustre un diagramme 40 présentant sur un axe des abscisses 42, le facteur temps, et sur un axe des ordonnées 44, la pression. L'intérieur de la conduite tubulaire flexible 10 est alors mise en pression en injectant un fluide sous pression, par exemple de l'eau. Dans une première phase de pressurisation 46, la pression P est portée à une valeur de pression P₁, par exemple 1500 bars, en 4 heures. Cette pression P₁ est alors maintenue pendant une période de temps t₁ par exemple de 12 heures. Ensuite, lors d'une phase de dépressurisation 48 la pression est rabaissée rapidement à une valeur Pᵢ voisine de la pression atmosphérique P₀ pour être remontée ensuite durant une seconde phase de pressurisation 50 à une seconde valeur de pression P₂, inférieure à P₁. La conduite est alors maintenue à la pression P₂ pendant une seconde période de temps t₂, par exemple de 24 heures.

Selon un autre aspect de l'invention, afin d'apporter de l'énergie thermique à la gaine de pression 20, on injecte un fluide chaud à l'intérieur de la conduite tubulaire flexible 10. Le fluide chaud est par exemple de l'eau portée à une température sensiblement supérieure à 80 °C. De la sorte, la température de la gaine de pression 20 atteint progressivement une température voisine de 80 °C. Cette température est alors maintenue durant toute la période du cycle de pressurisation/dépressurisation/pressurisation, laquelle période peut s'étendre sur environ 40 heures.

Avantageusement, on met en œuvre une bâche longitudinalement autour de la structure de la conduite tubulaire flexible 10, de façon à limiter la dissipation d'énergie thermique apportée pour chauffer cette dernière.

Selon une variante, la conduite tubulaire flexible 10 est placée à l'intérieur d'une enceinte hermétique régulée en température. La circulation d'un fluide chaud dans l'enceinte permet d'apporter l'énergie thermique à la gaine de pression 20.

Selon une autre variante, on arrange une bâche régulée thermiquement comprenant des tubes métalliques ou des résistances, autour et le long de la structure de la conduite tubulaire flexible 10 pour apporter l'énergie thermique à la gaine de pression 20. Ainsi, on fait circuler un fluide chaud tel que de l'eau ou une huile au sein des tubes métalliques pour chauffer ladite gaine tandis que l'on fait circuler un courant électrique au sein des résistances pour chauffer ladite gaine.

De manière avantageuse, on combine l'injection d'un fluide chaud à l'intérieur de la conduite flexible 10 avec l'arrangement d'une bâche régulée thermiquement.

On se reportera à présent sur la figure 4 montrant les résultats du chauffage de la gaine de pression 14, durant l'épreuve de pressurisation interne de la conduite tubulaire flexible 10.

On retrouve sur la figure 4, la conduite tubulaire flexible 10 en coupe hémi-axiale telle que représentée sur la figure 2. On y retrouve notamment la gaine de pression 14 située entre la carcasse 12 et la voûte de pression 20. On observera, que de chaque côté des déjoints 30, la surface externe 18 de la gaine de pression 14 tangente les bords internes 31, 33 des spires 22 et les zones de retrait, telles qu'illustrées sur la figure 2 ont disparu. Au surplus, au sein des excursions 32 et du côté de la surface interne 16 de la gaine de pression 14, il n'apparaît plus de traces des phénomènes de cavitation, ni de zones de décohésion observés précédemment.

La diminution de la viscosité du matériau permet de remplir l'intérieur des déjoints 30 en minimisant les contraintes internes dans la matière. Cette minimisation des contraintes permet de ne pas générer de cavitation.

Ainsi, il apparaît que la mise en pression de la conduite tubulaire flexible 10 conjointement à un apport thermique à la gaine de pression 14 à une température voisine de la température de transition secondaire T_{g'} du matériau polymère, permet d'obtenir une meilleure intégrité de cette gaine de pression 14, sans avoir recours à un film écran. En procédant ainsi, on est sûr que la gaine de pression reste intègre durant toute la durée de vie de la conduite tubulaire flexible en service, celle-ci étant soumise à plusieurs cycles de montée/descente en pression et en température et partant à du vieillissement.

Lorsque le matériau polymère est porté à une température voisine ou supérieure à la température de transition secondaire T_{g'} toutes les zones de phase amorphe, libres ou confinés, passent par un état caoutchouteux, et partant, les contraintes induites dans le matériau polymère au niveau des déformations engendrées par le fluage de celui-ci dans des déjoints 30, se dissipent par un mécanisme de relaxation dans une zone étendue du matériau polymère.

En outre, il s'avère qu'au voisinage de la température de transition secondaire T_{g'} le matériau polymère subi de grandes déformations sans qu'apparaisse le phénomène de cavitation.

Selon une variante d'exécution de l'invention, le matériau polymère mis en œuvre pour réaliser la gaine de pression 14 est le Poly(perfluoroalcoxyéthylène) ou PFA. La température de transition vitreuse T_{g} de ce matériau thermoplastique et d'environ -80°C et la température de transition secondaire T_{g'} est d'environ 90°C. Il est possible, en appliquant le même procédé que celui décrit ci-dessus, d'obtenir une gaine en PFA intègre pendant au moins 20 ans.

La mise en pression de l'intérieur de la conduite 10 à une pression P_{d} au moins égale à 1500 bars combiné à un apport d'énergie thermique proche de la température de transition secondaire T_{g'} du PFA, soit aux environs de 80°C, permet d'éviter l'apparition d'un défaut 36 de la surface interne 16 de la gaine de pression 14, défaut dû au phénomène de cavitation.

## Revendications

1. Procédé de fabrication d'une conduite tubulaire flexible destinée au transport des hydrocarbures, ledit procédé étant du type comprenant les étapes suivantes :
a) on forme une gaine de pression tubulaire (14) déformable en matériau polymère thermoplastique, ladite gaine de pression tubulaire (14) présentant une surface externe (18) et une surface interne (16) opposée définissant un espace d'écoulement interne (11) des hydrocarbures ;
b) on enroule hélicoïdalement à pas court un fil métallique autour de ladite gaine de pression tubulaire (14) de manière à former des spires (22) en appui sur ladite surface externe (18), lesdites spires définissant entre elles des intervalles successifs (30) ;
c) on enroule hélicoïdalement à pas long une pluralité de fils d'armures de traction (25) autour desdites spires (22) ; et,
d) on porte ledit espace d'écoulement interne (11) à une pression P supérieure à une pression donnée P_{d}, de sorte que ladite surface externe (18) de ladite gaine de pression se déforme radialement au niveau desdits intervalles (30) ;
**caractérisé en ce qu'**a l'étape d), on porte en outre simultanément ladite gaine de pression tubulaire (14) à une température T supérieure à une température donnée T_{d}, tandis que ledit espace d'écoulement interne (11) est porté à une première pression P₁ pendant une première période de temps t₁ et à une seconde pression P₂ inférieure à P1 pendant une seconde période de temps t₂,
et **en ce qu'**entre lesdites première et seconde périodes de temps t₁ et t₂, ledit espace d'écoulement interne (11) est porté à une pression P voisine de la pression atmosphérique P₀ et ensuite ladite pression P est remontée à ladite seconde valeur de pression P₂, de manière à pouvoir relaxer les contraintes internes dudit matériau polymère de ladite surface externe (18) déformée audit niveau desdits intervalles (30).

2. Procédé selon la revendication 1, **caractérisé en ce que**, ledit matériau polymère thermoplastique présentant une température de transition vitreuse T_{g} et une température de transition secondaire T_{g'} supérieure à ladite température de transition vitreuse T_{g}, ladite température donnée T_{d} est comprise entre T_{g} et T_{g'}.

3. Procédé selon la revendication 2, **caractérisé en ce que** ladite température donnée T_{d} est voisine de ladite seconde température de transition vitreuse T_{g'}.

4. Procédé selon l'une quelconque des revendications 1 à 3, **caractérisé en ce que** ladite température donnée T_{d} est supérieure à la température ambiante T₀.

5. Procédé selon l'une quelconque des revendications 1 à 4, **caractérisé en ce qu'**à l'étape d), ladite pression donnée P_{d} est supérieure à la pression atmosphérique P₀.

6. Procédé selon l'une quelconque des revendications 1 à 5, **caractérisé en ce que** ladite seconde période de temps t₂ est supérieure ou égale à ladite première période de temps t₁.

7. Procédé selon l'une quelconque des revendications 1 à 6, **caractérisé en ce que** ladite seconde période de temps t₂ est comprise entre une et trois fois ladite première période de temps t₁.

8. Procédé selon l'une quelconque des revendications 1 à 7, **caractérisé en ce que** ladite première période de temps t₁ présente une durée supérieure ou égale à 12 heures.

9. Procédé selon l'une quelconque des revendications 1 à 8, **caractérisé en ce que** ledit matériau polymère thermoplastique est choisi parmi les matériaux de la famille des polymères fluorés.

10. Procédé selon l'une quelconque des revendications 1 à 8, **caractérisé en ce que** ledit matériau polymère thermoplastique est choisi parmi les matériaux de la famille des polymères sulfoniques ou de la famille des polymères aryléthercétone.

11. Procédé selon l'une quelconque des revendications 1 à 10, **caractérisé en ce qu'**entre l'étape c) et l'étape d), on forme une gaine de protection tubulaire (28) autour de ladite pluralité de fils d'armures de traction (25).

12. Conduite tubulaire flexible destinée au transport des hydrocarbures, obtenue par un procédé de fabrication selon l'une quelconque des revendications 1 à 11.

## Patentansprüche

1. Verfahren zur Herstellung einer flexiblen Rohrleitung, die zum Transport von Kohlenwasserstoffen bestimmt ist, wobei das Verfahren vom Typ ist, der folgende Schritte umfasst:
a) ein Formen einer verformbaren Rohrdruckhülle (14) aus thermoplastischem Polymermaterial, wobei die Rohrdruckhülle (14) eine Außenfläche (18) und eine gegenüberliegende Innenfläche (16) aufweist, die dazwischen einen inneren Strömungsraum (11) für Kohlenwasserstoffe definieren;
b) ein spiralförmiges Kurzgang-Wickeln eines Metalldrahts um die Rohrdruckhülle (14), so dass an der Außenfläche (18) anliegende Windungen (22) gebildet werden, wobei die Windungen zwischen einander aufeinanderfolgende Intervalle (30) definieren;
c) ein spiralförmiges Breitgangwickeln einer Vielzahl von Armierungsdrähten mit Zug (25) um die Windungen (22); und
d) ein Bringen des inneren Strömungsraums (11) auf einen Druck P, der größer als ein gegebener Druck P_{d} ist, so dass sich die Außenfläche (18) der Druckhülle radial im Bereich der Intervalle (30) verformt;
**dadurch gekennzeichnet, dass** in Schritt d) gleichzeitig ferner die Rohrdruckhülle (14) auf eine Temperatur T gebracht wird, die größer als eine gegebene Temperatur T_{d} ist, während der innere Strömungsraum (11) während eines ersten Zeitraums t₁ auf einen ersten Druck P₁ und während eines zweiten Zeitraums t₂ auf einen zweiten Druck P₂, der kleiner als P₁ ist, gebracht wird,
und dass zwischen dem ersten und zweiten Zeitraum t₁ und t₂ der innere Strömungsraum (11) auf einen Druck P nahe des Umgebungsdrucks P₀ gebracht wird und anschließend der Druck P wieder auf den zweiten Druckwert P₂ erhöht wird, so dass die inneren Spannungen des Polymermaterials der im Bereich der Intervalle (30) verformten Außenfläche (18) entspannt werden können.

2. Verfahren nach Anspruch 1, **dadurch gekennzeichnet, dass** das thermoplastische Polymermaterial eine Glasübergangstemperatur T_{g} und eine Sekundärübergangstemperatur T_{g'}, die größer als die Glasübergangstemperatur ist, aufweist, wobei die gegebene Temperatur T_{d} zwischen T_{g} und T_{g'} liegt.

3. Verfahren nach Anspruch 2, **dadurch gekennzeichnet, dass** die gegebene Temperatur T_{d} nahe der zweiten Glasübergangstemperatur T_{g'} ist.

4. Verfahren nach einem der Ansprüche 1 bis 3, **dadurch gekennzeichnet, dass** die gegebene Temperatur T_{d} größer als die Umgebungstemperatur T₀ ist.

5. Verfahren nach einem der Ansprüche 1 bis 4, **dadurch gekennzeichnet, dass** in Schritt d) der gegebene Druck P_{d} größer als der Umgebungsdruck P₀ ist.

6. Verfahren nach einem der Ansprüche 1 bis 5, **dadurch gekennzeichnet, dass** der zweite Zeitraum t₂ größer oder gleich dem ersten Zeitraum t₁ ist.

7. Verfahren nach einem der Ansprüche 1 bis 6, **dadurch gekennzeichnet, dass** der zweite Zeitraum t₂ zwischen dem Ein- und dem Dreifachen des ersten Zeitraums t₁ liegt.

8. Verfahren nach einem der Ansprüche 1 bis 7, **dadurch gekennzeichnet, dass** der erste Zeitraum t₁ eine Dauer von größer oder gleich 12 Stunden aufweist.

9. Verfahren nach einem der Ansprüche 1 bis 8, **dadurch gekennzeichnet, dass** das thermoplastische Polymermaterial ausgewählt ist aus Materialien der Gruppe der fluorierten Polymere.

10. Verfahren nach einem der Ansprüche 1 bis 8, **dadurch gekennzeichnet, dass** das thermoplastische Material ausgewählt ist aus Materialien der Gruppe der sulfonierten Polymere oder der Aryletherketon-Polymere.

11. Verfahren nach einem der Ansprüche 1 bis 10, **dadurch gekennzeichnet, dass** zwischen Schritt c) und Schritt d) eine Rohrschutzhülle (28) um die Vielzahl der Bewehrungsdrähte mit Zug (25) gebildet wird.

12. Biegsame Rohrleitung, bestimmt für den Transport von Kohlenwasserstoffen, die durch ein Herstellungsverfahren nach einem der Ansprüche 1 bis 11 erhalten wird.

## Claims

1. A method of manufacturing a flexible tubular pipe intended for transporting hydrocarbons, said method being of the type including the following steps:
a) forming a thermoplastic polymer material deformable tubular pressure sheath (14), said tubular pressure sheath (14) having an external surface (18) and an opposite internal surface (16) defining an internal flow space (11) for the hydrocarbons;
b) helicoidally winding a metal wire at a short pitch around said tubular pressure sheath (14) so as to form turns (22) resting on said external surface (18), said turns defining successive intervals (30) therebetween;
c) helicoidally winding a plurality of armoring pull wires (25) at a long pitch around said turns (22); and
d) bringing said internal flow space (11) to a pressure P greater than a given pressure P_{d} so that said external surface (18) of said pressure sheath is deformed radially at the level of said intervals (30);
**characterized in that** in the step d) said tubular pressure sheath (14) is simultaneously brought to a temperature T greater than a given temperature T_{d} whereas said internal flow space (11) is brought to a first pressure P₁ during a first time period t₁ and to a second pressure P₂ lower than P₁ during a second time period t2,
and **in that**, between said first and second time periods t₁ and t₂, said internal flow space (11) is brought to a pressure P close to the atmospheric pressure P₀ and then said pressure P is raised to said second pression value P₂ so as to be able to relieve the internal stresses of said polymer material of said external surface (18) deformed at the level of said intervals (30).

2. The method as claimed in claim 1, **characterized in that** said thermoplastic polymer material having a glass transition temperature T_{g} and a secondary transition temperature T_{g'} greater than said glass transition temperature T_{g}, said given temperature T_{d} is between T_{g} and T_{g'}.

3. The method as claimed in claim 2, **characterized in that** said given temperature T_{d} is close to said second glass transition temperature T_{g'}.

4. The method as claimed in any one of claims 1 to 3, **characterized in that** said given temperature T_{d} is greater than the ambient temperature To.

5. The method as claimed in any one of claims 1 to 4, **characterized in that** in the step d) said given pressure P_{d} is greater than the atmospheric pressure P₀.

6. The method as claimed in any one of claims 1 to 5, **characterized in that** said second time period t₂ is greater than or equal to said first time period t₁.

7. The method as claimed in any one of claims 1 to 6, **characterized in that** said second time period t₂ is between said first time period t₁ and three times said first time period t₁.

8. The method as claimed in any one of claims 1 to 7, **characterized in that** said first time period t₁ has a duration greater than or equal to 12 hours.

9. The method as claimed in any one of claims 1 to 8, **characterized in that** said thermoplastic polymer material is chosen from the materials of the fluorinated polymer family.

10. The method as claimed in any one of claims 1 to 8, **characterized in that** said thermoplastic polymer material is chosen from the materials of the sulfonic polymer family or the aryletherketone polymer family.

11. The method as claimed in any one of claims 1 to 10, **characterized in that** between the step c) and the step d) a tubular protection sheet (28) is formed around said plurality of armoring pull wires (25).

12. A flexible tubular pipe intended for transporting hydrocarbons, produced by a method of manufacture as claimed in any one of claims 1 to 11.
